# EUROPEAN PATENT APPLICATION

(11) **EP 1 681 147 A1**
(43) Date of publication of application: **19.07.2006**
(21) Application number: 05075066.0
(22) Date of filing: 13.01.2005
(51) Int. Cl.: B27N 3/00, C08G 12/28

(54) **Oriented strand board**

(71) Applicant: DSM IP Assets B.V., 6411 TE Heerlen (NL)
(72) Inventor: Nusselder, Jan Jacob Hendrik, 6174 RE Sweikuizen (NL); Stijnen, Hubertus Marie Christine, 6171 SH Stein (NL)
(74) Representative: Koster, Nico

(57) **Abstract**

The invention relates to an Oriented Strand Board (OSB), comprising a core layer and two face layers, whereby at least one layer comprises an adhesive composition, characterised in that the adhesive composition comprises a resin composition comprising urea and formaldehyde, whereby the resin composition further comprises melamine and/or an aromatic hydroxyl compound, wherein:
- the molar ratio of formaldehyde to the sum of melamine and the aromatic hydroxyl compound lies between 8:1 and 100:1;
- the molar ratio of formaldehyde to the sum of -(NH₂)₂ and the aromatic hydroxyl compound lies between 1:0.2 and 1:2.

The invention further relates to a process for preparing the OSB according to the invention.

## Description

The invention relates to an Oriented Strand Board (OSB), comprising a core layer and two face layers, whereby at least one layer comprises an adhesive composition.

Such an OSB, as well as a process for the production thereof is known in general, and described in for instance: "Holzwerkstoffe und Leime, M. Dunky and P. Niemz, p 133-135, Springer-Verlag, 2002" and in "Taschenbuch der Spanplatten Technik, Deppe & Ernst, p 258-266, 1991, DRW Verlag".

A disadvantage of the known OSB is that typically expensive and high-performance adhesive compositions, such as adhesive compositions based on polymeric methylene diphenyl diisocyanate (pMDI), are used so that the OSB meets stringent criteria such as the requirements of OSB/3 or OSB/4 in the EN 300 standards, while at the same time there is also a need for an OSB that meets a somewhat less stringent set of requirements such as the known 'Exposure 1' requirements.

It is the objective of the present invention to overcome the said disadvantage.

The said objective is achieved in that the adhesive composition comprises a resin composition comprising urea and formaldehyde, whereby the resin composition further comprises melamine and/or an aromatic hydroxyl compound, wherein:
- the molar ratio of formaldehyde to the sum of melamine and the aromatic hydroxyl compound lies between 8:1 and 100:1;
- the molar ratio of formaldehyde to the sum of -(NH₂)₂ and the aromatic hydroxyl compound lies between 1:0.2 and 1:2.

An advantage of the OSB according to the invention is that maximum use can be made of low-cost components such as formaldehyde and urea, while at the same time the OSB can meet many criteria needed in practice such as the Exposure 1 criteria.

The invention relates to an oriented strand board (OSB). The OSB comprises a core layer of wood strands; the core layer is covered at each side by a face layer of wood strands. The core layer can be one homogeneous layer but it can also consist of several sub-layers. Typically, the wood strands for both the core layer and the face layer are combined with an adhesive composition. As is known, the choice and orientation of the wood strands and the curing of the adhesive composition - combined with a pressing operation - results in the OSB having certain properties. These properties are often described as lying between those of particle board and plywood. The wood strands in the OSB typically have the following dimensions; length between 5 and 150 mm, width between 1 and 50 mm and thickness between 0.1 and 2 mm. The core can form between 10 and 90 wt.% of the OSB, mostly between 40 and 70% of the OSB. The wood strands for the core layer may be the same as for the face layers, or they may be different. The adhesive composition for the core may be the same as for the face layer(s), or it may be different. The adhesive composition for the two face layers may be the same or it may be different.

According to the invention, the adhesive composition of at least one layer - either the core layer and/or one or both face layers - comprises (i.e. is prepared from) a resin composition comprising urea and formaldehyde, and also melamine and/or an aromatic hydroxyl compound. In general, such resin compositions and their preparation are known as such. As is known, an adhesive composition is prepared from a resin composition by the addition of at least a catalyst to the resin composition; preferably, no further resins are added in this process. According to the invention, the resin composition comprises urea, formaldehyde, and also melamine and/or an aromatic hydroxyl compound. Within the context of the present invention, the terms melamine and urea mean the compound as such or the compound combined with amounts of up to 25 wt.% of derivatives. Examples of melamine derivatives are ammeline, ammelide, melam, and melem. An example of a urea derivative is biuret. The aromatic hydroxyl compound is a compound or a mixture of compounds having at least one -OH group directly attached to an aromatic ring. Preferably, the aromatic hydroxyl compound mainly comprises or even consists essentially of phenol. Within the context of the present invention, formaldehyde means the compound as such or a compound that can release formaldehyde under resin-forming or adhesive-forming or adhesive-curing conditions; examples of such compounds are paraformaldehyde and trioxan. Within the context of the present invention, the reference to formaldehyde, melamine, urea and the aromatic hydroxyl compound means the compound as such or incorporated into a resin in reacted form.

The resin composition is characterised according to the invention by several molar ratios. The molar ratio of formaldehyde to the sum of melamine and the aromatic hydroxyl compound lies between 8:1 and 100:1. Thus, although at least one of melamine and the aromatic hydroxyl compound is present, they are present in relatively low amounts compared to the amount of formaldehyde. It is surprising that an OSB that is prepared with such a low amount of melamine and/or aromatic hydroxyl compound can still pass the Exposure 1 test, a test especially relevant and known in the USA market. The said ratio of formaldehyde to the sum of melamine and the aromatic hydroxyl compound should be at least 8:1 in order to optimise the economic characteristics of the OSB according to the invention. Preferably, the said ratio is at least 9:1, 10:1, 11:1, 12:1, 13:1, 14:1 or even 15:1. The ratio should be at most 100:1 in order to ensure that the benefits as brought on by melamine and/or the aromatic hydroxyl compound manifest themselves in the OSB according to the invention. Preferably the said ratio is at most 95:1, 90:1, 85:1, 80:1, 75:1, 70:1, 65:1, 60:1, 55:1 or even 50:1. The molar ratio between melamine and the aromatic hydroxyl compound can be 100:0, 0:100, or any value in between such as 75:25, 50:50, or 25:75.

In view of the molar ratio of formaldehyde to the sum of melamine and the aromatic hydroxy compound in the resin composition, it is not possible that - based on the melamine and/or the aromatic hydroxy compound alone - all or even the large majority of the formaldehyde has reacted or can react away, as is desirable in a resin composition. The resin composition according to the invention therefore also comprises urea, in such an amount that the ratio of formaldehyde to the overall sum of the compounds that can form a resin with formaldehyde - i.e. the sum of melamine, urea and the aromatic hydroxyl compound, whereby melamine and urea are now expressed in their molar -(NH₂)₂ equivalents - lies between 1:0.2 and 1:2. It is customary for skilled persons working with resins that contain urea and/or melamine to work with the formaldehyde to -(NH₂)₂ ratio (F/(NH₂)₂ ratio); this enables to express the molar ratio of formaldehyde to the sum of urea and melamine while taking the difference in the number of reactive groups between urea and melamine into account. As is known, one urea molecule has two -(NH₂) groups, whereas one melamine molecule has three. The expression 'the sum of -(NH₂)₂' as used herein therefore has the customary meaning of the sum of urea and melamine, recalculated into -(NH₂)₂ equivalents. Preferably, the molar ratio of formaldehyde to the sum of -(NH₂)₂ and the aromatic hydroxyl compound lies between 1:0.4 and 1:1.7, between 1:0.6 and 1:1.5, or between 1:0.8 and 1:1.3. The consequence of this ratio, since the amount of melamine and/or the aromatic hydroxyl compound is fixed at levels far below the molar amount of formaldehyde, is that the 'gap' between on the one hand the required molar ratio of melamine and/or the aromatic hydroxyl compound to formaldehyde and on the other hand the required ratio of formaldehyde and all compounds that it should react with is 'bridged' by urea.

According to the invention, it can be useful to consider the molar ratio of melamine to urea in the resin composition. In a preferred embodiment, this ratio lies between 1:8 and 1:100, confirming that if melamine is used there will be much more urea than melamine.

As indicated above, the resin composition according to the invention can comprise melamine and preferably does so. Typically then, the ratios as given above can lead to a resin having between 1 and 10 wt.% of melamine (weight percentage of the total resin, said resin having a solids content of about 60%), preferably between 2 and 8, 3 and 7, or 4 and 6 wt.%. In those types of resin compositions, there is only limited room for the aromatic hydroxyl compound, said room being determined by the molar ratio of formaldehyde to the sum of melamine and aromatic hydroxyl compound according to the invention.

Alternatively and as also indicated above, the resin composition according to the invention can comprise the aromatic hydroxyl compound, preferably phenol. Typically then, the ratios as given above can lead to a resin having between 1 and 10 wt.% of the aromatic hydroxyl compound (weight percentage of the total resin, said resin having a solids content of about 60%), preferably between 2 and 8, 3 and 7, or 4 and 6 wt.%. In those types of resin compositions, there is only limited room for melamine, said room being determined by the molar ratio of formaldehyde to the sum of melamine and aromatic hydroxyl compound according to the invention.

The resin composition as used in the OSB according to the invention may be prepared by methods that are known as such. In one preferred embodiment, the resin composition is prepared by preparing a urea-formaldehyde resin, and by also preparing a melamine-urea-formaldehyde resin and/or an aromatic hydroxy-formaldehyde resin, after which these resins are mixed so as to arrive at a resin composition that satisfies the composition criteria within the ranges of the present invention. In an alternative embodiment, the desired amount of melamine is already co-condensed with urea in one resin, after which this resin is mixed with a desired amount of an aromatic hydroxy-formaldehyde resin. The resin composition in the OSB according to the invention preferably has a weight-average molecular weight lying between 500 and 10,000, preferably between 1,000 and 9,000. If the resin composition contains melamine, then the resin composition is preferably prepared in such a way that at least the cloud point has been reached. As is known, the cloud point of a melamine-containing resin is reached when a drop of resin, put into a large quantity of water at 20°C, no longer dissolves but shows turbidity.

As indicated above, an adhesive composition is prepared from a resin composition by adding at least a catalyst to the resin composition. According to the invention, any suitable catalyst may be used, such as for example those catalysts now in use for the curing of urea- or urea-melamine-containing adhesive compositions. Examples of such catalysts are ammonium sulphate, ammonium chloride, and ammonium nitrate. Aside from a catalyst, other substances may - as in known - be added to the resin or to the adhesive composition; waxes are examples of such other substances. Preferably according to the invention, the molar ratios as given above for the resin composition also apply to the adhesive composition as a whole.

At least one layer in the OSB according to the invention comprises an adhesive composition as described above. For technical reasons, a certain minimum amount of adhesive composition - depending on the specific type and thickness of the OSB - will be needed in order for the OSB to fulfil the desired requirements such as the Exposure 1 criteria. For economic reasons, there will be a desire to set a maximum on the amount of resin. The amount of adhesive composition used in the at least one layer - or, in a preferred embodiment, in both face layers or even in all layers - of the OSB preferably lies between 2.5 and 12 wt.%. This weight percentage is expressed as the amount of dry resin per amount of dry wood. As the skilled person knows, the dry resin amount of a resin is determined by multiplying the amount of resin with the solids content. The solids content of a resin is determined by putting a small amount of resin (e.g., 1 or 2 grams) in an oven at 120°C during 2 hours. The solids content is defined as the relative weight of the remaining material and is expressed as percentage of the weight of the resin as put into the oven. Preferably, the amount of adhesive composition used in the at least one layer lies between 3 and 11 wt.%, more preferably between 3.5 and 10.5, 4 and 10, 4.5 and 9.5, 5 and 9, or 5.5 and 8.5 wt.%.

The OSB according to the invention may comprise other adhesives, aside from the adhesive composition according to the invention. An example of such an other adhesive is pMDI, phenol-formaldehyde, or an adhesive composition comprising a melamine-containing resin composition with a high amount of melamine. This may occur for example when one layer of the OSB comprises the adhesive composition according to the inventions, and another layer comprises another adhesive. It is also possible that the layer or layers that comprise the adhesive composition according to the invention also comprise another adhesive; it is however preferred that the amount of such an other adhesive is limited to 50 wt.%, or more preferably to 40, 30, 20, 10, or 5 wt.% of the amount of the adhesive composition according to the invention. Most preferably, the layer or layers that comprise the adhesive composition according to the invention do not comprise another adhesive.

The invention further relates to a process for the preparation of an oriented strand board (OSB), and to the OSB so obtainable. The process according to the invention - which enables the preparation of the OSB according to the invention as described above - comprises the steps of:
a) preparing an adhesive composition comprising a resin comprising urea and formaldehyde, whereby the resin composition further comprises melamine and/or an aromatic hydroxyl compound, wherein the molar ratio of formaldehyde to the sum of melamine and the aromatic hydroxyl compound lies between 8:1 and 100:1, and the molar ratio of formaldehyde to the sum of -(NH₂)₂ and the aromatic hydroxyl compound lies between 1:0.2 and 1:2;
b) treating wood strands with the adhesive composition;
c) scattering adhesive-treated wood strands for a face layer, a core layer on top of the face layer, and again a face layer on top of the core layer, whereby the wood strands of at least one layer were treated in step b) with the adhesive composition prepared in a);
d) pressing the layers of wood strands as formed in c), whereby the adhesive composition is at least partially cured, to form an OSB.

An OSB is usually prepared by first scattering - while typically achieving an orientation - the material for a face layer, thereafter scattering the material for the core layer on top of the material for the face layer, and then again scattering a layer of face layer material on top of the core layer material; this scattering step is then followed by a hot pressing step so as to form an OSB. Curing of the adhesive composition and any other adhesives takes place during the hot pressing. The pressing can be continuous or batch wise. In the core layer and the face layers wood strands of different size and orientation can be used. Often, the wood strands in the core layer have smaller dimension(s) and less orientation than the wood strands in the face layers.

As described here, an OSB has three layers - a core and two face layers. It is also known that an OSB having 4 or more layers may be prepared, for instance by dividing the core layer into two layers. Within the context of the present invention, all layers that are not face layers are regarded - and treated according the invention - as the core layer.

Typical known press conditions are 1-7 MPa, 150-270°C during 3-12 sec/mm, preferably 5-10 sec/mm. As is known to those skilled in the art, press times are given in seconds per mm of OBS thickness.

## Claims

1. Oriented Strand Board (OSB), comprising a core layer and two face layers, whereby at least one layer comprises an adhesive composition, **characterised in that** the adhesive composition comprises a resin composition comprising urea and formaldehyde, whereby the resin composition further comprises melamine and/or an aromatic hydroxyl compound, wherein:
• the molar ratio of formaldehyde to the sum of melamine and the aromatic hydroxyl compound lies between 8:1 and 100:1;
• the molar ratio of formaldehyde to the sum of -(NH₂)₂ and the aromatic hydroxyl compound lies between 1:0.2 and 1:2.

2. OSB according to claim 1 wherein both face layers comprise the adhesive composition.

3. OSB according to claim 1 or 2 wherein the core layer comprises the adhesive composition.

4. OSB according to any one of claims 1 - 3, wherein the OSB complies with the Exposure 1 test.

5. Process for the preparation of an oriented strand board (OSB), comprising the steps of:
a) preparing an adhesive composition comprising a resin composition comprising urea and formaldehyde, whereby the resin further comprises melamine and/or an aromatic hydroxyl compound, wherein the molar ratio of formaldehyde to the sum of melamine and the aromatic hydroxyl compound lies between 8:1 and 100:1, and the molar ratio of formaldehyde to the sum of -(NH₂)₂ and the aromatic hydroxyl compound lies between 1:0.2 and 1:2;
b) treating wood strands with the adhesive composition;
c) scattering adhesive-treated wood strands for a face layer, a core layer on top of the face layer, and again a face layer on top of the core layer, whereby the wood strands of at least one layer were treated in step b) with the adhesive composition prepared in a);
d) pressing the layers of wood strands as formed in c), whereby the adhesive composition is at least partially cured, to form an OSB.

6. Oriented Strand board (OSB), obtainable by the process of claim 5.
